# EUROPEAN PATENT APPLICATION

(11) **EP 3 557 915 A1**
(43) Date of publication of application: **23.10.2019**
(21) Application number: 19169783.8
(22) Date of filing: 17.04.2019
(51) Int. Cl.: H04W 48/20, H04W 88/00, H04W 88/04, H04W 84/00

(54) **COMMUNICATION METHOD IN WIRELESS LOCAL AREA NETWORK, DEVICE, AND ACCESS POINT**

(30) Priority: 17.04.2018 CN 201810345000
(71) Applicant: HUAWEI TECHNOLOGIES CO., LTD., Guangdong 518129 (CN)
(72) Inventor: WU, Weimin, Wuhan, Hubei 430074 (CN); ZHANG, Xueting, Wuhan, Hubei 430074 (CN); YU, Jian, Shenzhen, Guangdong 518129, P.R. (CN)
(74) Representative: Gill Jennings & Every LLP

(57) **Abstract**

A communication method in a wireless local area network, a device, and an access point are disclosed. In the method, a first station sends an association request message to a second station, where the association request message is used to request to establish an association between the first station and an access point, the first station and the second station are communications devices installed on a means of transportation, the access point is located outside the means of transportation, and the access point is an access point with which the second station has been associated or is to be associated; and the second station sends the received association request message to the access point when the second station has been associated with the access point, receives an association response message sent by the access point, and sends the association response message to the first station, where the association response message is used to indicate approval or rejection of association establishment between the first station and the access point.

## Description

### TECHNICAL FIELD

This application relates to the field of communications technologies, and in particular, to a communication method in a wireless local area network, a device, and an access point.

### BACKGROUND

A basic service set (BSS) in a wireless local area network (WLAN) may include an access point (AP) and at least one station (STA). The STA may access the wireless local area network by using the AP, and then can communicate with other devices inside and outside the wireless local area network. Before accessing the wireless local area network by using the AP, the STA needs to establish an association with the AP, so as to establish a communication link for data transmission.

When the STA moves, due to a problem such as a signal quality problem, the STA may need to switch from a BSS in which a currently associated AP is located to a BSS in which another AP is located. In this case, the STA needs to be reassociated with the another AP. Particularly, in a scenario in which the STA moves fast, the STA may frequently switch between BSSs, and therefore the STA needs to be frequently reassociated with APs in different BSSs. For example, as a train moves fast, a STA installed on the train needs to be frequently reassociated with an AP next to a railway. In this scenario, because the STA moves relatively fast, it is possible that when the STA has moved to a coverage area of a BSS to which the STA needs to switch, the STA fails to establish in time an association with an AP in the BSS to which the STA needs to switch. As a result, the STA cannot access the wireless local area network within a short time, and a user senses network interruption.

### SUMMARY

This application provides a communication method in a WLAN, a device, and an access point, so as to resolve a problem that a network is interrupted because a STA is not associated with an AP in time.

According to a first aspect, this application provides a communication method in a WLAN. The method may be applicable to a scenario in which a first STA and a second STA installed on a means of transportation interact, when moving with the means of transportation, with an AP built next to a traveling road of the means of transportation. The second STA is located in the front of the first STA in a traveling direction of the means of transportation.

In this method, the first STA sends an association request message to the second STA, where the association request message is used to request to establish an association between the first STA and the AP, and the AP is an AP with which the second STA has been associated or is to be associated. Further, the second STA sends the received association request message to the AP when the second STA has been associated with the AP, receives an association response message sent by the AP, and sends the association response message to the first STA, where the association response message is used to indicate approval or rejection of association establishment between the first STA and the AP.

In this method, the second STA is located in the front of the first STA in the traveling direction of the means of transportation and the first STA and the second STA have a same traveling route, and therefore the first STA is quite likely to move to a coverage area of a BSS to which the second STA belongs. In view of this, it is proposed in this application that before the first STA moves to a coverage area of a BSS to which the AP belongs, the second STA may assist the first STA in initiating an association procedure to the AP in advance, to exchange association information in advance. In this way, when moving to the coverage area of the BSS to which the AP belongs, the first STA can make the association with the AP take effect immediately and communicate with a device in the BSS to which the AP belongs, thereby effectively preventing a network from being interrupted because the first STA is not associated with the AP in time.

In a possible design, the association request message sent by the first STA to the second STA is in a first Ethernet frame, and a frame header of the first Ethernet frame includes a first identifier used to identify the association request message; and
the association response message sent by the second STA to the first STA is in a second Ethernet frame, and a frame header of the second Ethernet frame includes a second identifier used to identify the association response message.

In the foregoing design, when the second STA assists the first STA in initiating the association procedure to the AP in advance, the first STA may exchange the association request message and the association response message with the second STA in a wired communication mode. The first Ethernet frame sent by the first STA to the second STA may lack an indication used to identify a receiver of the association request message. In this case, the first STA does not specifically specify a specific AP with which the first STA requests to establish an association. Further, after receiving the first Ethernet frame, and determining, based on the first identifier, that the association request message is encapsulated into the first Ethernet frame, the second STA may consider by default that the receiver of the association request message is the AP with which the second STA has been associated or is to be associated.

In a possible design, the association request message sent by the first STA to the second STA is in a first WLAN frame, and a frame header of the first WLAN frame includes a third identifier used to identify the association request message; and
the association response message sent by the second STA to the first STA is in a second WLAN frame, and a frame header of the second WLAN frame includes a fourth identifier used to identify the association response message.

In the foregoing design, when the second STA assists the first STA in initiating the association procedure to the AP in advance, the first STA may exchange the association request message and the association response message with the second STA in a wireless communication mode.

An indication, in the first WLAN frame sent by the first STA to the second STA, used to indicate a receiver of the association request message may be a default value. Further, after receiving the first WLAN frame, and determining, based on the third identifier, that the association request message is encapsulated into the first WLAN frame, the second STA may consider by default that the receiver of the association request message is the AP with which the second STA has been associated or is to be associated.

In a possible design, the association request message sent by the second STA to the AP is in a third WLAN frame.

A frame header of the third WLAN frame includes a fifth identifier used to identify the association request message, a medium access control (MAC) address of the first STA, a MAC address of the second STA, and a MAC address of the AP. The MAC address of the first STA is used to identify a STA that requests to establish an association with the AP, the MAC address of the second STA is used to identify a sender of the third WLAN frame, and the MAC address of the AP is used to identify a receiver of the association request message.

In the foregoing design, the fifth identifier is added to the frame header of the third WLAN frame, so that the AP can determine message content encapsulated into the third WLAN frame. The MAC address of the first STA and the MAC address of the second STA are added to the frame header of the third WLAN frame, so that the AP can determine that the STA that requests to establish an association with the AP is the first STA and a STA that assists the first STA in initiating the association procedure is the second STA.

According to a second aspect, this application provides a communication method in a WLAN. The method may be performed by an AP built next to a traveling road of a means of transportation. In this method, the AP receives an association request message sent by a first STA associated with the AP, where the association request message is used to request to establish an association between a second STA and the AP. Further, the AP sends an association response message to the first STA, where the association response message is used to indicate approval or rejection of association establishment between the second STA and the AP.

In this method, the AP may complete, by using the first STA that has been associated with the AP, exchange of association information required in a process of establishing an association with the second STA. In this way, when moving to a coverage area of a BSS to which the AP belongs, the second STA can make the association with the AP take effect immediately and communicate with a device in the BSS to which the AP belongs, thereby effectively preventing a network from being interrupted because the second STA is not associated with the AP in time.

The association response message sent by the AP to the first STA may be in a first WLAN frame. A frame header of the first WLAN frame includes a first identifier used to identify the association response message, a MAC address of the first STA, a MAC address of the second STA, and a MAC address of the AP. The MAC address of the first STA is used to identify a STA that requests to establish an association with the AP, the MAC address of the second STA is used to identify a receiver of the first WLAN frame, and the MAC address of the AP is used to identify a sender of the association response message.

In the foregoing design, the first identifier is added to the frame header of the first WLAN frame, so that the first STA can identify message content encapsulated into the first WLAN frame. The MAC address of the first STA and the MAC address of the second STA are added to the frame header of the first WLAN frame, so that the first STA can determine that the received association response message is returned by the AP to the second STA.

According to a third aspect, this application provides a communications device. The communications device includes a first station and a second station. The first station and the second station have functions that implement the communication method in the WLAN in any one of the first aspect or the possible designs of the first aspect.

According to a fourth aspect, this application provides an access point. The access point includes a processor and a transceiver. The processor and the transceiver have functions used in the communication method in the WLAN that is performed by the access point in any one of the second aspect or the possible designs of the second aspect.

According to a fifth aspect, this application provides an access point. The access point includes a sending unit and a receiving unit. The sending unit and the receiving unit have functions used in the communication method in the WLAN that is performed by the access point in any one of the second aspect or the possible designs of the second aspect.

According to a sixth aspect, this application provides a computer readable storage medium. The computer readable storage medium stores a computer instruction, and when the instruction is executed on a computer, the computer performs the communication method in the WLAN in any one of the first aspect or the possible designs of the first aspect.

According to a seventh aspect, this application provides a computer readable storage medium. The computer readable storage medium stores a computer instruction, and when the instruction is executed on a computer, the computer performs the communication method in the WLAN in any one of the second aspect or the possible designs of the second aspect.

### BRIEF DESCRIPTION OF DRAWINGS

FIG. 1 is a network architecture diagram of a wireless local area network according to an embodiment of this application;
FIG. 2 is a schematic diagram illustrating a first STA and a second STA according to an embodiment of this application;
FIG. 3 is a schematic flowchart of a communication method in a WLAN according to an embodiment of this application;
FIG. 4A is a schematic diagram 1 of a scenario according to an embodiment of this application;
FIG. 4B is a schematic diagram 2 of a scenario according to an embodiment of this application;
FIG. 5 is a schematic flowchart of a communication method in a WLAN according to an embodiment of this application;
FIG. 6A is a schematic diagram 1 of a frame structure of a first Ethernet frame according to an embodiment of this application;
FIG. 6B is a schematic diagram 2 of a frame structure of a first Ethernet frame according to an embodiment of this application;
FIG. 7 is a schematic flowchart of a communication method in a WLAN according to an embodiment of this application;
FIG. 8 is a schematic diagram of an interaction procedure according to an embodiment of this application;
FIG. 9 is a schematic diagram of an identifier in a WLAN frame according to an embodiment of this application;
FIG. 10 is a schematic structural diagram 1 of an access point according to an embodiment of this application; and
FIG. 11 is a schematic structural diagram 2 of an access point according to an embodiment of this application.

### DESCRIPTION OF EMBODIMENTS

To make the objectives, technical solutions, and advantages of this application clearer, the following further describes this application in detail with reference to the accompanying drawings.

In some wireless local area network scenarios, a STA frequently moves from a coverage area of a BSS to a coverage area of another BSS during fast movement. In this case, the STA needs to frequently switch between BSSs and establish an association with an AP in a BSS to which the STA needs to switch. However, because the STA moves at a relatively high speed, it is possible that when the STA has moved to a coverage area of the BSS to which the STA needs to switch, the STA fails to establish in time an association with the AP in the BSS to which the STA needs to switch. As a result, the STA cannot access a wireless local area network normally, and a network is interrupted. To resolve the foregoing problem, the embodiments of this application provide a communication method in a WLAN, so as to resolve a problem that a STA is not associated with an AP in time.

Before the method provided in the embodiments of this application is described, a network architecture to which the embodiments of this application may be applicable is described.

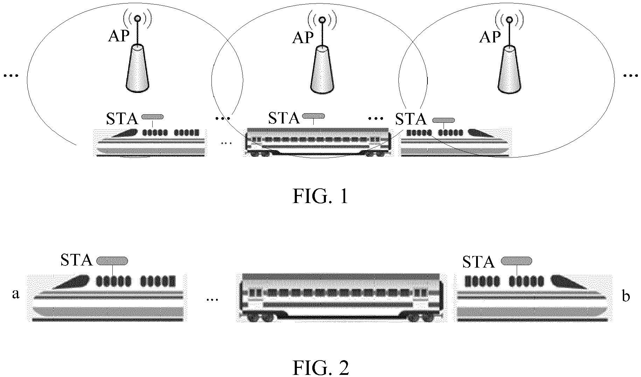

FIG. 1 shows an example of a network architecture diagram of a wireless local area network according to an embodiment of this application. The network architecture includes at least two STAs installed on a means of transportation and an AP built next to a traveling road of the means of transportation. For example, the means of transportation is a train, a bus, or a subway. The at least two STAs installed on the means of transportation may be relay communications devices, and there is a wired or wireless communication link between the at least two STAs, to support wired or wireless communication between the at least two STAs. As the means of transportation travels fast, the STAs on the means of transportation move to coverage areas of BSSs to which different APs belong, and establish associations with the different APs. After at least one of the at least two STAs successfully establishes an association with an AP, a terminal device used by a user traveling by the means of transportation can communicate with the roadside AP by using the STA that has successfully established the association with the AP.

To ensure that a STA can establish an association with an AP in time during fast movement, the embodiments of this application provide a communication method in a WLAN, so that a STA that has established an association with an AP can be used to assist a STA that has not established an association with an AP in completing a process of establishing an association with the AP. The following uses a specific embodiment to describe the method provided in the embodiments of this application.

It should be understood that in the following descriptions, terms such as "first" and "second" are merely used to differentiate between descriptions, and shall not be understood as an indication or implication of relative importance or an order.

In addition, in the following descriptions, the method provided in the embodiments of this application is described by using any two STAs of the at least two STAs installed on the means of transportation as an example. The any two STAs are respectively represented by a first STA and a second STA, and the second STA is located in the front of the first STA in a traveling direction of the means of transportation. For example, as shown in FIG. 2, because the front and the rear of a train are usually not distinguished, for STAs installed at two ends of the train: a and b, when the train travels in a direction a→b, a STA located at the end a may be considered as a first STA, and the other STA located at the end b may be considered as a second STA; or when the train travels in a direction b→a, a STA located at the end a may be considered as a second STA, and the other STA located at the end b may be considered as a first STA. For another example, for STAs installed at the front and rear of a bus, a STA located at the front may be considered as a second STA, and the other STA located at the rear may be considered as a first STA.

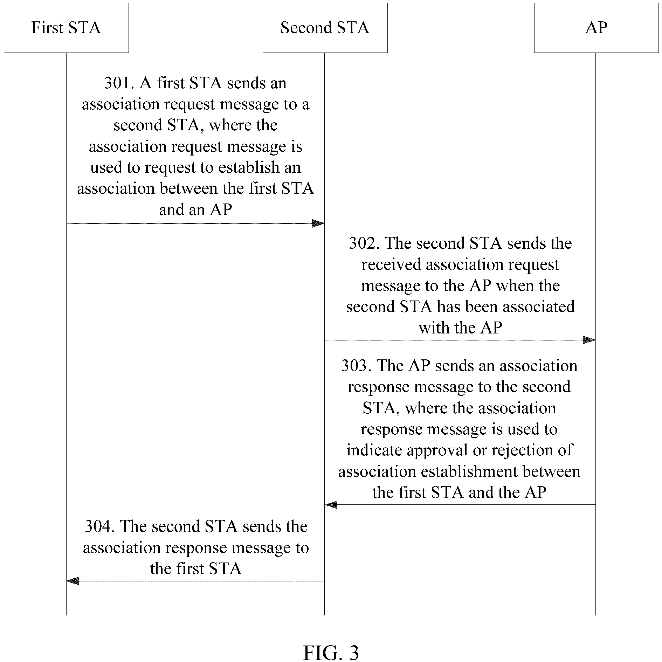

Based on an implementation environment in which the at least two STAs installed on the means of transportation in the foregoing example are used, FIG. 3 shows a communication method in a WLAN according to an embodiment of this application. The method may include the following steps.

Step 301. A first STA sends an association request message to a second STA, where the association request message is used to request to establish an association between the first STA and an AP. The association request message may be carried in an Ethernet frame or a WLAN frame. For example, the association request message is a frame body of the Ethernet frame or the WLAN frame. The association request message may be in a same format as that of a frame body of an association request frame or a reassociation request frame in the WLAN. The association request message may alternatively be in a customized format, and include information required for association completion.

In this embodiment of this application, the second STA is located in the front of the first STA in a traveling direction of the means of transportation and the first STA and the second STA have a same traveling route, and therefore the first STA is quite likely to move to a coverage area of a BSS to which the second STA belongs. In addition, before the first STA is to move to the coverage area of the BSS to which the second STA belongs, the second STA possibly has initiated an association procedure to an AP in the BSS to which the second STA belongs. Based on the foregoing characteristics, the first STA may send the association request message to the second STA in advance. Certainly, the first STA may alternatively send the association request message to the second STA after the second STA has established an association with the AP. In other words, the AP with which the first STA requests to establish an association may be an AP with which the second STA has been associated or is to be associated. To be specific, such an association state may be understood as a situation in which the second STA has initiated the association procedure to the AP but has not received an association success indication returned by the AP, and the like.

Before the first STA sends the association request message to the second STA, the second STA may send, to the first STA in advance, a related parameter of the AP with which the second STA has been associated or is to be associated. The related parameter may include but is not limited to a service set identifier (SSID) or a basic service set identifier (BSSID) of the AP, and capability information of the AP. In this way, the first STA may obtain in advance a related parameter of an AP in a BSS to which the first STA needs to switch, and indicate, when sending the association request message to the second STA, the AP with which the first STA requests to establish an association. Alternatively, the second STA may not send the related parameter of the AP to the first STA, and the first STA directly sends the association request message to the second STA and does not indicate the AP with which the first STA requests to establish an association. The AP with which the first STA requests to establish an association may be understood as a final receiver of the association request message, and the AP may be located on either side of a road on which the means of transportation is traveling.

Step 302. When receiving the association request message sent by the first STA, if the second STA has been associated with the AP, the second STA directly sends the received association request message to the AP; or if the second STA has not completed a process of establishing an association with the AP, the second STA first completes the process of establishing the association with the AP, and then sends the received association request message to the AP after the second STA has been associated with the AP.

If the first STA does not indicate the AP with which the first STA requests to establish an association, when the second STA is successfully associated with the AP, the second STA may consider by default that the AP with which the first STA requests to establish an association is the AP with which the second STA has been associated, and then sends the association request message to the associated AP. If the first STA indicates the AP with which the first STA requests to establish an association, when the second STA is successfully associated with the AP, the second STA may determine whether the associated AP is the AP that is indicated by the first STA and with which the first STA requests to establish an association; and if the associated AP is the AP that is indicated by the first STA, send the association request message to the associated AP.

In addition, when sending the association request message to the associated AP, the second STA may also indicate a sender of the association request message and a STA that requests to establish an association with the AP, so that the AP can effectively identify, after receiving the association request message, a specific STA that requests to establish an association with the AP. It should be understood that the sender of the association request message herein is the second STA that sends the association request message in a current interaction procedure between the second STA and the AP, and the first STA is the STA that requests to establish an association with the AP, namely, an initial sender of the association request message.

Step 303. The AP sends an association response message to the second STA after receiving the association request message sent by the second STA, where the association response message is used to indicate approval or rejection of association establishment between the first STA and the AP. The association response message may be carried in an Ethernet frame or a WLAN frame. For example, the association response message is a frame body of the Ethernet frame or the WLAN frame. The association response message may be in a same format as that of a frame body of an association response frame or a reassociation response frame in the WLAN. The association response message may alternatively be in a customized format, and include information required for association completion.

The AP may return the association response message in two manners. In one manner, when approving association establishment between the AP and the first STA, the AP sends the association response message to the second STA. In this case, the association response message is used to indicate approval of association establishment between the first STA and the AP. In the other manner, regardless of approving or rejecting association establishment between the AP and the first STA, the AP sends the association response message to the second STA. In this case, the association response message includes an identifier used to indicate approval or rejection of association establishment between the first STA and the AP.

Moreover, when sending the association response message to the second STA, the AP may also indicate a receiver of the association response message and the STA that requests to establish an association with the AP, so that the second STA confirms, after receiving the association response message, the STA to which the AP returns the association response message. It should be understood that the receiver of the association response message is the second STA that receives the association response message in the current interaction procedure between the second STA and the AP, and the first STA is the STA that requests to establish an association with the AP, namely, a final receiver of the association response message.

Step 304. The second STA sends the association response message to the first STA after receiving the association response message sent by the AP.

In an existing standard, one AP may be simultaneously associated with a plurality of STAs and one STA can be associated with only one AP at any moment. Therefore, in this embodiment of this application, when the first STA receives the association response message and the association response message is used to indicate approval of association establishment between the first STA and the AP, the first STA may not make the association with the AP take effect immediately, but confirm, when moving to the coverage area of the BSS to which the AP belongs, that the association with the AP takes effect.

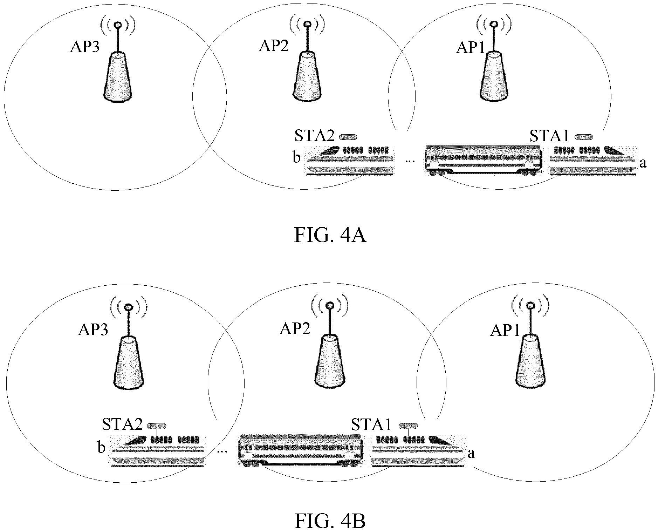

For example, referring to a schematic diagram 1 of a scenario shown in FIG. 4A, it is assumed that a STA1 and a STA2 are installed at two ends of a train: a and b, there are an AP1, an AP2, and an AP3 next to a railroad track, the STA1 is located in a coverage area of a BSS to which the API belongs and has been associated with the API, and the STA2 is located in a coverage area of a BSS to which the AP2 belongs and has been associated with the AP2. When the STA1 and the STA2 move with the train in a direction a→b, the STA1 sends, to the AP2 by using the STA2, an association request message used to request to establish an association with the AP2, and receives an association response message that is used to indicate approval of association establishment between the STA1 and the AP2 and that is returned by the AP2 by using the STA2. Because the STA1 is currently located in the coverage area of the BSS to which the API belongs and has been associated with the API, the STA1 still keeps the association with the API and temporarily stores, in the STA1, association information that is exchanged when the STA1 establishes an association with the AP2. Further, referring to a schematic diagram 2 of a scenario shown in FIG. 4B, when the STA1 moves to the coverage area of the BSS to which the AP2 belongs, the STA1 makes the association with the AP2 take effect, and is disassociated from the AP1.

In this embodiment of this application, when the first STA and the second STA installed on the means of transportation move with the means of transportation, because the first STA and the second STA have a same moving route and the second STA is located in the front of the first STA in the traveling direction of the means of transportation, the first STA is quite likely to move to the coverage area of the BSS to which the second STA belongs, and the second STA may move, ahead of the first STA, to the coverage area of the BSS to which the AP belongs and establish an association with the AP ahead of the first STA. Based on this, before moving to the coverage area of the BSS to which the AP belongs, the first STA may initiate in advance an association procedure to the AP by using the second STA, to exchange association information in advance. In this way, when moving to the coverage area of the BSS to which the AP belongs, the first STA can make the association with the AP take effect immediately and communicate with a device in the BSS to which the AP belongs, thereby effectively preventing a network from being interrupted because the first STA is not associated with the access point in time.

In this embodiment of this application, the first STA and the second STA installed on the means of transportation may communicate in a wired communication (such as Ethernet communication or power line communication) or wireless communication (such as WLAN communication or cellular mobile network communication) mode. When WLAN communication is performed between the first STA and the second STA, a frequency domain resource occupied for communication between the first STA and the second STA may be different from a frequency domain resource occupied for communication between the first STA and the AP and a frequency domain resource occupied for communication between the second STA and the AP. Interference and collisions generated during communication are reduced as much as possible in the inter-frequency communication mode.

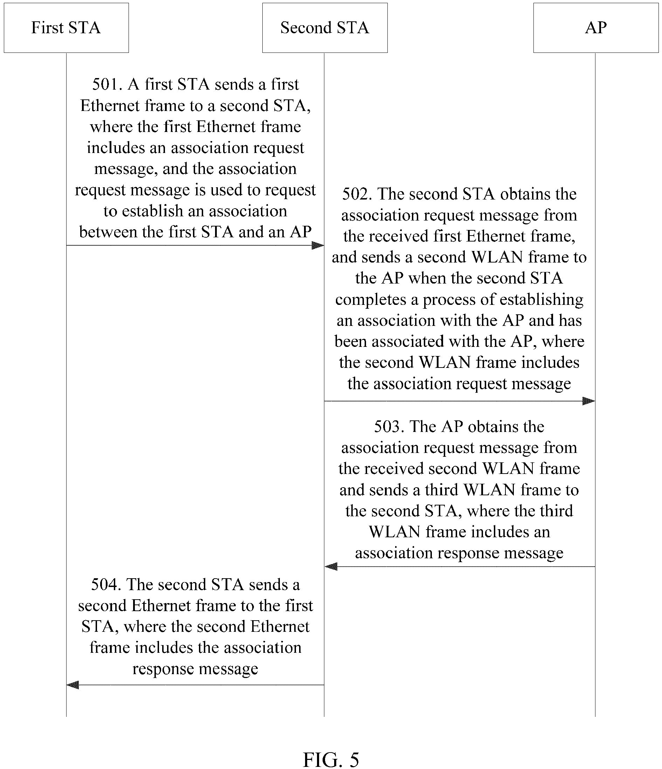

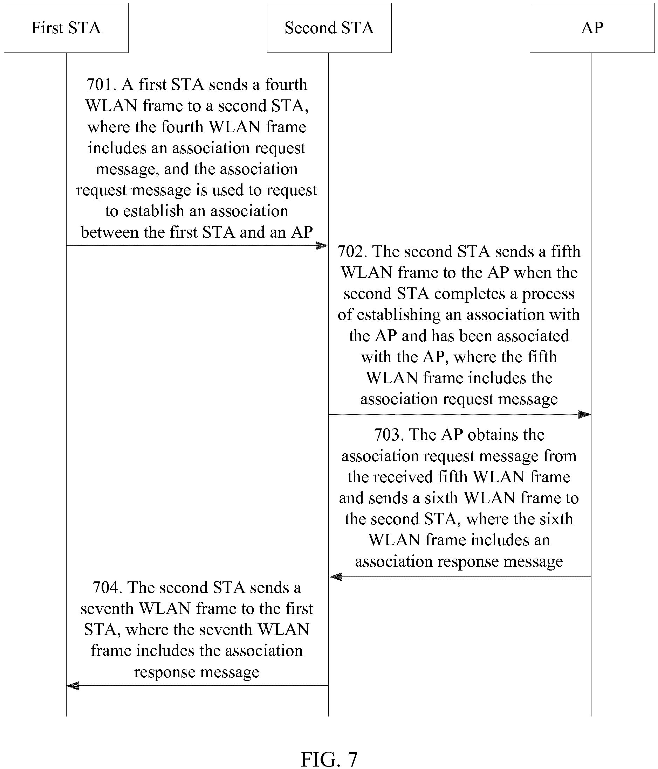

The following uses examples in which Ethernet communication and WLAN communication are separately performed between the first STA and the second STA, to further describe the communication method in the WLAN provided in this embodiment of this application. Steps of methods described in embodiments shown in FIG. 5 and FIG. 7 are basically the same as the steps of the method described in the embodiment shown in FIG. 3, and focus on a frame structure and a corresponding processing manner that are specifically used when the first STA, the second STA and the AP interact with each other.

Ethernet communication is performed between the first STA and the second STA is corresponding to a communication method in a WLAN provided in an embodiment of this application shown in FIG. 5. The method includes the following steps.

Step 501. The first STA sends a first Ethernet frame to the second STA, where the first Ethernet frame includes an association request message, the association request message is used to request to establish an association between the first STA and an AP, and a frame header of the first Ethernet frame includes a first identifier used to identify the association request message.

The first Ethernet frame sent by the first STA to the second STA includes the frame header of the first Ethernet frame, a frame body of the first Ethernet frame, and a frame trailer of the first Ethernet frame. In addition to the first identifier, the frame header of the first Ethernet frame includes a sender address, a receiver address, and the like. The sender address is a MAC address used when the first STA performs Ethernet communication, and is used to determine that a sender of the first Ethernet frame is the first STA. The receiver address is a MAC address used when the second STA performs Ethernet communication, and is used to determine that a receiver of the first Ethernet frame is the second STA. The frame trailer of the first Ethernet frame includes a frame check sequence (FCS) that is used by the receiver to check, after the receiver receives the first Ethernet frame, whether an error occurs on data in the first Ethernet frame. The frame body of the first Ethernet frame carries the association request message, and the association request message may include but is not limited to capability information of the first STA.

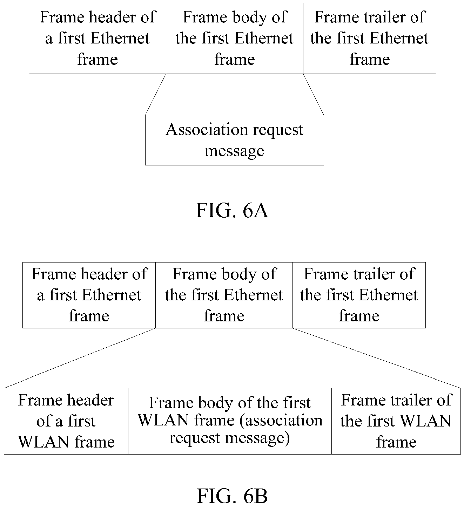

In an example 1 of this application, the frame body of first Ethernet frame may directly carry the association request message, as shown in FIG. 6A. In this case, the first Ethernet frame sent by the first STA does not include an indication used to identify a receiver of the association request message. In other words, the first STA does not indicate the AP with which the first STA requests to establish an association.

In an example 2 of this application, the frame body of the first Ethernet frame may carry a first WLAN frame, including a frame header of the first WLAN frame, a frame body of the first WLAN frame, and a frame trailer of the first WLAN frame, and the frame body of the first WLAN frame carries the association request message, as shown in FIG. 6B. In an example, the frame header of the first WLAN frame includes fields of a sender address and a receiver address. In another example, the frame header of the first WLAN frame includes fields of a sender address, a receiver address, and a source address. In another example, the frame header of the first WLAN frame includes fields of a sender address, a receiver address, a source address, and a destination address.

When the frame header of the first WLAN frame includes the fields of the sender address and the receiver address, the sender address is a MAC address used when the first STA performs wireless communication, and is used to identify a STA that requests to establish an association with the AP, and the sender address may also be understood as being used to identify an initial sender of the association request message; and the receiver address is a MAC address of an AP with which the second STA has been association or is to be associated, and is used to identify a receiver of the association request message. When the frame header of the first WLAN frame includes the fields of the sender address, the receiver address, and the source address, the source address is a MAC address used when the first STA performs wireless communication, the sender address is a MAC address used when the second STA performs wireless communication, and the receiver address is a MAC address of an AP with which the second STA has been associated or is to be associated. When the frame header of the first WLAN frame includes the fields of the sender address, the receiver address, the source address, and the destination address, the sender address and the source address are MAC addresses used when the first STA performs wireless communication, the receiver address is a MAC address used when the second STA performs wireless communication, and the destination address is a MAC address of an AP with which the second STA has been associated or is to be associated.

If the first STA has not indicated, to the first STA before sending the first Ethernet frame to the second STA, a related parameter of the AP with which the second STA has been associated or is to be associated, the receiver address or the destination address in the frame header of the first WLAN frame may alternatively be a default value. Assuming that the receiver address or the destination address is represented by N bytes, and N is a positive integer, it indicates that the receiver address or the destination address is a default value when the N bytes may be set to a preset value. The preset value may be, for example, 0 or a wildcard character BSSID (such as all ones in binary). In addition, the frame header of the first WLAN frame may further include a second identifier used to identify the association request message. The frame trailer of the first WLAN frame may include an FCS of the first WLAN frame, and the FCS is used by the receiver to check, after the receiver receives the first WLAN frame, whether an error occurs on data in the first WLAN frame.

Compared with the example 1, the example 2 has the following advantages: The first WLAN frame is added to the first Ethernet frame and the association request message is encapsulated into the frame body of the first WLAN frame, so that the second STA can obtain the first WLAN frame directly from the received first Ethernet frame. Because the association request message has been encapsulated into the first WLAN frame, the second STA can send the first WLAN frame including the association request message to the AP without re-encapsulating the association request message. This reduces processing load of the second STA.

Step 502. The second STA obtains the association request message from the received first Ethernet frame, and sends a second WLAN frame to the AP when the second STA completes a process of establishing an association with the AP and has been associated with the AP, where the second WLAN frame includes the association request message, and a frame header of the second WLAN frame includes a third identifier used to identify the association request message.

When the frame structure shown in FIG. 6A is used for the first Ethernet frame, after receiving the first Ethernet frame, the second STA may confirm, by identifying the first identifier in the frame header of the first Ethernet frame, that the first Ethernet frame includes the association request message, and then decapsulate the first Ethernet frame to obtain the association request message. Further, when the second STA has been associated with the AP, the second STA may encapsulate the obtained association request message into the second WLAN frame. In addition to the third identifier, the frame header of the second WLAN frame may include address fields such as a sender address, a receiver address, and a source address. In an example, the frame header of the second WLAN frame includes fields of the sender address, the receiver address, the source address, and a destination address. The sender address is a MAC address used when the second STA performs wireless communication, and is used to identify a sender of the second WLAN frame. The source address is a MAC address used when the first STA performs wireless communication, and is used to identify a STA that requests to establish an association with the AP, and the source address may also be understood as being used to identify an initial sender of the association request message. The receiver address and the destination address are MAC addresses of the AP, and are used to identify a receiver of the association request message. In another example, the frame header of the second WLAN frame includes fields of the sender address, the receiver address, and the source address. The sender address is a MAC address used when the second STA performs wireless communication, and is used to identify a sender of the second WLAN frame. The source address is a MAC address used when the first STA performs wireless communication, and is used to identify a STA that requests to establish an association with the AP. The receiver address is a MAC address of the AP, and is used to identify a receiver of the association request message.

When the frame structure shown in FIG. 6B is used for the first Ethernet frame, after receiving the first Ethernet frame and confirming, by identifying the first identifier in the frame header of the first Ethernet frame, that the first Ethernet frame includes the association request message, the second STA decapsulates the first Ethernet frame to obtain the first WLAN frame carrying the association request message. If the second STA does not need to modify or add/delete the data in the first WLAN frame, the second STA may directly send the first WLAN frame to the AP. The frame header of the first WLAN frame includes the MAC address used when the first STA performs wireless communication, the MAC address used when the second STA performs wireless communication, the MAC address of the AP, and the second identifier used to identify the association request message. It should be understood that in this case, the first WLAN frame is the same as the second WLAN frame, and the second identifier used to identify the association request message is the same as the third identifier used to identify the association request message. If the second STA needs to modify or add/delete the data in the first WLAN frame depending on an actual requirement, the second STA sends a modified or added/deleted first WLAN frame to the AP. The modified or added/deleted first WLAN frame herein may be considered as the second WLAN frame.

Step 503. The AP obtains the association request message from the received second WLAN frame and sends a third WLAN frame to the second STA, where the third WLAN frame includes an association response message, the association response message is used to indicate approval or rejection of association establishment between the first STA and the AP, and a frame header of the third WLAN frame includes a fourth identifier used to identify the association response message.

After receiving the second WLAN frame, the AP may confirm, by identifying the third identifier, in the frame header of the second WLAN frame, used to identify the association request message, that a STA requests to establish an association with the AP; and may further confirm, by identifying fields of the sender address and the source address in the frame header of the second WLAN frame, that the STA that requests to establish an association with the AP is the first STA, and that a STA that assists the first STA in sending the association request message to the AP is the second STA. Then, the AP decapsulates the second WLAN frame to obtain a parameter such as capability information of the first STA that is included in the association request message, encapsulates, into the third WLAN frame, the association response message including a parameter such as capability information of the AP, and sends the third WLAN frame to the second STA.

In addition to the fourth identifier used to identify the association response message, the frame header of the third WLAN frame may include fields of a sender address, a receiver address, a source address, and a destination address. The sender address and the source address are MAC addresses of the AP, and are used to identify a sender of the association response message. The receiver address is a MAC address of the second STA, and is used to identify a receiver of the third WLAN frame. It should be understood that the receiver of the third WLAN frame is not a final receiver of the association response message. The destination address is a MAC address of the first STA, and is used to identify a station that requests to establish an association with the AP, and the destination address may also be understood as being used to identify the final receiver of the association response message.

Step 504. The second STA sends a second Ethernet frame to the first STA after receiving the third WLAN frame, where the second Ethernet frame includes the association response message, and a frame header of the second Ethernet frame includes a fifth identifier used to identify the association response message.

After receiving the third WLAN frame, the second STA confirms, by identifying the fourth identifier that is used to identify the association response message and that is included in the frame header of the third WLAN frame, that the third WLAN frame includes the association response message returned by the AP; confirms, by identifying the receiver address and the destination address included in the frame header of the third WLAN frame, that the association response message is returned by the AP to the first STA; and then sends the second Ethernet frame to the first STA.

Corresponding to the first Ethernet frame sent by the first STA, the second Ethernet frame sent by the second STA may also be in two formats. In one format, the second STA decapsulates the third WLAN frame to obtain the association response message, and then encapsulates the association response message into the second Ethernet frame. In the other format, the second STA directly encapsulates the third WLAN frame into the second Ethernet frame. In addition to the fifth identifier used to identify the association response message, the frame header of the second Ethernet frame may include a sender address and a receiver address. The sender address is a MAC address used when the second STA performs Ethernet communication, and the receiver address is a MAC address used when the first STA performs Ethernet communication. A frame trailer of the second Ethernet frame includes an FCS, and the FCS is used by a receiver to check whether an error occurs on data in the received second Ethernet frame.

Subsequently, the first STA may decapsulate the second Ethernet frame or the third WLAN frame to obtain the association response message. If the association response message indicates approval of association establishment between the first STA and the AP, when the first STA enters a coverage area of a BSS to which the AP belongs, the first STA can make the association with the AP take effect immediately and communicate with a device in the BSS to which the AP belongs.

WLAN communication performed between the first STA and the second STA is corresponding to a communication method in a WLAN provided in an embodiment of this application shown in FIG. 7. It should be understood that for the following descriptions about content, related to the foregoing embodiment, of steps shown in FIG. 7, reference may be made to the descriptions in the foregoing embodiment. Details are not described in this embodiment. The steps shown in FIG. 7 are as follows.

Step 701. The first STA sends a fourth WLAN frame to the second STA, where the fourth WLAN frame includes an association request message, the association request message is used to request to establish an association between the first STA and an AP, and a frame header of the fourth WLAN frame includes a sixth identifier used to identify the association request message.

In an implementation, the frame header of the fourth WLAN frame may further include fields of a sender address and a receiver address. The sender address is a MAC address used when the first STA performs WLAN communication, and the receiver address is a MAC address used when the second STA performs WLAN communication. In this manner, the first STA may not indicate the AP with which the first STA requests to establish an association.

In another implementation, the frame header of the fourth WLAN frame may further include fields of a sender address, a receiver address, a source address, and a destination address. The sender address and the source address are MAC addresses used when the first STA performs WLAN communication; the receiver address is a MAC address used when the second STA performs WLAN communication; and the destination address is a MAC address of an AP with which the second STA has been associated or is to be associated, and is used to indicate the AP with which the first STA requests to establish an association. Certainly, in actual application, the destination address may alternatively be a default value and does not indicate the AP with which the first STA requests to establish an association. Alternatively, the frame header of the fourth WLAN frame may not include a destination address, and the frame header includes fields of a sender address, a receiver address, and a source address.

Step 702. The second STA sends a fifth WLAN frame to the AP when the second STA completes a process of establishing an association with the AP and has been associated with the AP, where the fifth WLAN frame includes the association request message, and a frame header of the fifth WLAN frame includes a seventh identifier used to identify the association request message.

After receiving the fourth WLAN frame, the second STA confirms, by identifying the sixth identifier in the frame header of the fourth WLAN frame, that the fourth WLAN frame includes the association request message. If the second STA does not need to add or modify data in a frame body of the fourth WLAN frame, the second STA may directly modify an address field in the frame header of the fourth WLAN frame, and send a modified fourth WLAN frame (which may be considered as the fifth WLAN frame) to the AP. When the second STA modifies the address field in the frame header of the fourth WLAN frame, if the frame header includes the foregoing two or three address fields, the second STA may modify the sender address to the MAC address used when the second STA performs WLAN communication, and modify the receiver address to the address of the AP with which the second STA has been associated. Moreover, a source address field may be further added to the frame header, and the source address field is the MAC address used when the first STA performs WLAN communication, and is used to identify a STA that requests to establish an association with the AP. If the frame header includes the foregoing four address fields and the destination address is a default value, in addition to modifying the sender address and the receiver address, the second STA may configure the destination address as the address of the AP with which the second STA has been associated.

In addition, if the second STA further needs to add or modify data in the frame body of the fourth WLAN frame, after decapsulating the fourth WLAN frame to obtain the association request message, the second STA may further re-encapsulate added or modified data and the association request message into the fifth WLAN frame and send the fifth WLAN frame to the AP.

Step 703. The AP obtains the association request message from the received fifth WLAN frame and sends a sixth WLAN frame to the second STA, where the sixth WLAN frame includes an association response message, the association response message is used to indicate approval or rejection of association establishment between the first STA and the AP, and a frame header of the sixth WLAN frame includes an eighth identifier used to identify the association response message.

After receiving the fifth WLAN frame, the AP confirms, by identifying the seventh identifier, in the frame header of the fifth WLAN frame, used to identify the association request message, that a STA requests to establish an association with the AP; and further confirms, by identifying a source address and a sender address in the frame header of the fifth WLAN frame, that the STA that requests to establish an association with the AP is the first STA, and that a STA that assists the first STA in sending the association request message to the AP is the second STA. Then, the AP decapsulates the fifth WLAN frame to obtain a parameter such as capability information of the first STA that is included in the association request message, encapsulates, into the sixth WLAN frame, the association response message including a parameter such as capability information of the AP, and sends the sixth WLAN frame to the second STA.

In addition to the eighth identifier, the frame header of the sixth WLAN frame may include fields of a sender address, a receiver address, a source address, and a destination address. The sender address and the source address are MAC addresses of the AP, and are used to identify a sender of the association response message. The receiver address is a MAC address of the second STA, and is used to identify a receiver of the sixth WLAN frame. It should be understood that the receiver of the sixth WLAN frame is not a final receiver of the association response message. The destination address is a MAC address of the first STA, and is used to identify a station that requests to establish an association with the AP, and the destination address may also be understood as being used to identify the final receiver of the association response message.

Step 704. The second STA sends a seventh WLAN frame to the first STA after receiving the sixth WLAN frame, where the seventh WLAN frame includes the association response message, and a frame header of the seventh WLAN frame includes a ninth identifier used to identify the association response message.

After receiving the sixth WLAN frame, the second STA confirms, by identifying the eighth identifier that is used to identify the association response message and that is included in the frame header of the sixth WLAN frame, that the sixth WLAN frame includes the association response message returned by the AP; confirms, by identifying the receiver address and the destination address included in the frame header of the sixth WLAN frame, that the association response message is returned by the AP to the first STA; and then sends the seventh WLAN frame to the first STA. The frame header of the seventh WLAN frame may include fields of a sender address and a receiver address; may include fields of a sender address, a receiver address, and a source address; or may include fields of a sender address, a receiver address, a source address, and a destination address. Details are not described herein again.

Subsequently, the first STA may decapsulate the received seventh WLAN frame to obtain the association response message. If the association response message indicates approval of association establishment between the first STA and the AP, when the first STA enters a coverage area of a BSS to which the AP belongs, the first STA can make the association with the AP take effect immediately and communicate with a device in the BSS to which the AP belongs.

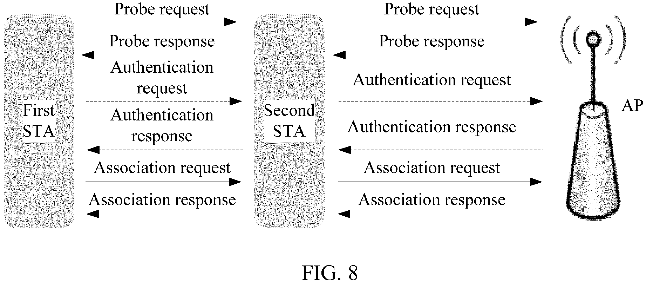

In addition, in this embodiment of this application, before establishing an association with the AP with the assistance of the second STA, the first STA may further perform a probe procedure and/or an authentication procedure with the AP with the assistance of the second STA. For example, referring to a schematic diagram of an interaction procedure shown in FIG. 8, the first STA may first initiate a probe procedure, specifically including: The first STA sends a probe request message to the second STA, the second STA sends the probe request message to the associated AP, the AP returns a probe response message, and then the second STA sends the probe response message to the first STA, so that the first STA finds the BSS to which the AP belongs. Further, the first STA may initiate an authentication procedure, specifically including: The first STA sends an authentication request message to the second STA, the second STA sends the authentication request message to the associated AP, the AP returns an authentication response message, and then the second STA sends the authentication response message to the first STA, so that the first STA and the AP complete the process of mutual authentication. After completing the probe procedure and the authentication procedure with the AP, the first STA subsequently initiates an association establishment procedure. For a manner of interaction between the first STA, the second STA, and the AP in the probe procedure and the authentication procedure, refer to the related descriptions of the foregoing association establishment procedure. Details are not described herein again.

In the probe, authentication, and association establishment procedure, a message exchanged between the first STA and the second STA may be encapsulated into an Ethernet frame or a WLAN frame, and a message exchanged between the second STA and the AP may be encapsulated into a WLAN frame. A type of the WLAN frame and the Ethernet frame may be a data frame or a management frame. This is not limited in this application. Moreover, during specific implementation, the foregoing probe procedure and authentication procedure are optional steps. The association establishment procedure may be performed directly after the probe procedure is completed, may be performed directly after the authentication procedure is completed, or may be performed directly without the probe procedure and the authentication procedure. This is not limited in this application.

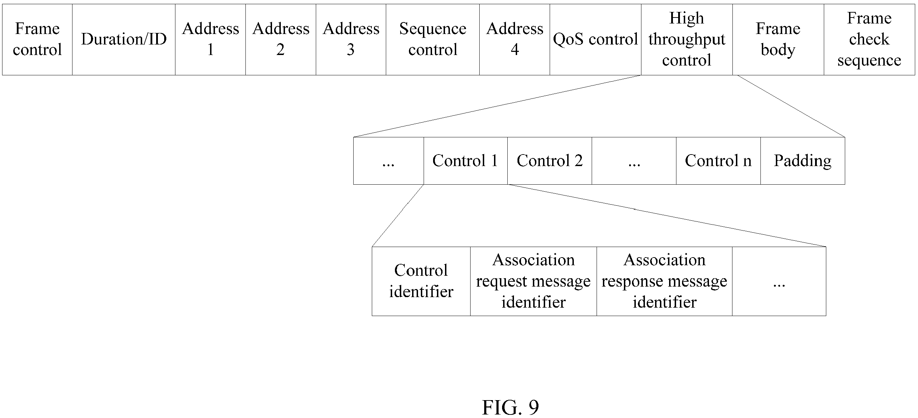

In this application, to distinguish between the exchanged messages, an identifier used to identify a message included in a frame body of the Ethernet frame or the WLAN frame is configured in a frame header of the Ethernet frame or the WLAN frame. The WLAN frame is used as an example to describe an identifier configured in a frame header. FIG. 9 shows an example of a schematic diagram of an identifier in a WLAN frame. In a frame header of the WLAN frame, for example, a high throughput control (HT Control) field may include n control subfields (control 1 to control n), where an aggregated control (A-Control) subfield (for example, a control subfield 1 shown in FIG. 9) may carry a control identifier and an identifier that is used to identify a message carried in a frame body of the WLAN frame. The control identifier in the control subfield 1 is used to identify a type of the current control subfield, that is, indicate a function of content, in the current control subfield, following the control identifier. Different control identifiers may be used to indicate different types of control subfields. For example, when the control identifier is 7, it may indicate that the content, in the current control subfield, following the control identifier is the identifier used to identify the message included in the frame body of the WLAN frame. For example, the included message may be an association request message and an association response message. The identifier may be represented by M bits, and M is a positive integer.

In an implementation, the identifier used to identify the message included in the frame body of the WLAN frame may be represented by a bitmap. Each of the M bits is used to identify one message included in the frame body of the WLAN frame, such as an association request message or an association response message. For example, when M is equal to 2, a first bit of the 2 bits may be used to indicate whether the frame body of the WLAN frame includes an association request message. When the first bit is 0, it indicates that the frame body of the WLAN frame includes no association request message; or when the first bit is 1, it indicates that the frame body of the WLAN frame includes an association request message. A second bit of the 2 bits is used to indicate whether the frame body of the WLAN frame includes an association response message. When the second bit is 0, it indicates that the frame body of the WLAN frame includes no association response message; or when the second bit is 1, it indicates that the frame body of the WLAN frame includes an association response message.

In another implementation, the identifier used to identify the message included in the frame body of the WLAN frame may be represented by using different index values. For example, when M is equal to 1, the identifier is represented by 1 bit. When the bit is 0, that is, an index value is 0, it indicates the frame body of the WLAN frame includes an association request message; or when the bit is 1, that is, an index value is 1, it indicates that the frame body of the WLAN frame includes an association response message. For another example, when M is equal to 2, the identifier is represented by 2 bits. When the 2 bits is "00", that is, an index value is 0, it indicates that the frame body of the WLAN frame includes an association request message. When the 2 bits is "01", that is, an index value is 1, it indicates that the frame body of the WLAN frame includes an association response message. When the 2 bits is "10", that is, an index value is 3, it indicates that the frame body of the WLAN frame includes an authentication request message. When the 2 bits is "11", that is, an index value is 4, it indicates that the frame body of the WLAN frame includes an authentication response message.

Certainly, in actual application, a quantity of bits occupied by the identifier and content identified by each bit may be configured depending on an actual requirement. This is not limited in this application. In addition, for a manner of an identifier that is used to identify a message included in a frame body of the Ethernet frame and that is configured in a frame header of the Ethernet frame, refer to the foregoing manner of the identifier configured in the frame header of the WLAN frame. Details are not described in this application.

Based on a same technical concept, an embodiment of this application further provides an access point, configured to implement the functions performed by the access point in the foregoing method embodiments.

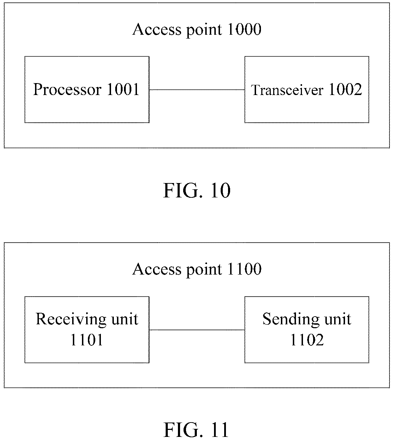

In an implementation, as shown in FIG. 10, an access point 1000 may include a processor 1001 and a transceiver 1002. The processor 1001 may be a central processing unit (CPU) or a network processor (NP). The processor 1001 may alternatively be another type of chip, for example, a baseband circuit, a radio frequency circuit, an application-specific integrated circuit (ASIC), a programmable logic device (PLD), or any combination thereof. The transceiver 1002 may include an antenna. Optionally, the access point 1000 may further include a memory (not shown in the figure), configured to store a program executed by the processor 1001 and data required for processing. The memory may be integrated into the processor 1001, or may be disposed independently of the processor 1001.

The processor 1001 is configured to receive, by using the transceiver 1002, an association request message sent by a first station associated with the access point 1000, where the association request message is used to request to establish an association between a second station and the access point 1000. Further, the processor 1001 is further configured to send an association response message to the first station by using the transceiver 1002, where the association response message is used to indicate approval or rejection of association establishment between the second station and the access point 1000.

For a specific processing process of the processor 1001 and the transceiver 1002, refer to the descriptions in the method embodiments shown in FIG. 3, FIG. 5, and FIG. 7. Details are not described herein again.

In another implementation, as shown in FIG. 11, an access point 1100 may include a receiving unit 1101 and a sending unit 1102.

The receiving unit 1101 is configured to receive an association request message sent by a first station associated with the access point 1100, where the association request message is used to request to establish an association between a second station and the access point 1100.

The sending unit 1102 is configured to send an association response message to the first station, where the association response message is used to indicate approval or rejection of association establishment between the second station and the access point 1100.

For a specific processing process of the receiving unit 1101 and the sending unit 1102, refer to the descriptions in the method embodiments shown in FIG. 3, FIG. 5, and FIG. 7. Details are not described herein again.

Based on a same technical concept, this application provides a computer readable storage medium. The computer readable storage medium stores a computer instruction, and when the instruction is executed on a computer, the computer performs the communication method in the WLAN in the foregoing method embodiments.

A person skilled in the art should understand that the embodiments of this application may provide a method, a system, or a computer program product. Therefore, this application may use a form of hardware only embodiments, software only embodiments, or embodiments with a combination of software and hardware. Moreover, this application may use a form of a computer program product that is implemented on one or more computer readable storage media (including but not limited to a magnetic disk memory and an optical memory) including a computer instruction.

The objectives, technical methods, and beneficial effects of this application are described in detail in the foregoing embodiments. It should be understood that the foregoing descriptions are merely specific implementations of this application, but are not intended to limit the protection scope of this application. Any modification and variation made based on the technical solutions of this application shall fall within the protection scope of this application.

## Claims

1. A communication method in a wireless local area network, WLAN, wherein a communications device installed on a means of transportation comprises a first station and a second station, the second station is located in the front of the first station in a traveling direction of the means of transportation, and the method comprises:
sending, by the first station, an association request message to the second station, wherein the association request message is used to request to establish an association between the first station and an access point, the access point is located outside the means of transportation, and the access point is an access point with which the second station has been associated or is to be associated; and
sending, by the second station, the received association request message to the access point when the second station has been associated with the access point, receiving an association response message sent by the access point, and sending the association response message to the first station, wherein the association response message is used to indicate approval or rejection of association establishment between the first station and the access point.

2. The method according to claim 1, wherein the association request message sent by the first station to the second station is in a first Ethernet frame, and a frame header of the first Ethernet frame comprises a first identifier used to identify the association request message; and
the association response message sent by the second station to the first station is in a second Ethernet frame, and a frame header of the second Ethernet frame comprises a second identifier used to identify the association response message.

3. The method according to claim 2, wherein the first Ethernet frame lacks an indication used to identify a receiver of the association request message; and
the method further comprises:
confirming, by the second station when the second station has been associated with the access point, that the receiver of the association request message is the access point.

4. The method according to claim 1, wherein the association request message sent by the first station to the second station is in a first WLAN frame, and a frame header of the first WLAN frame comprises a third identifier used to identify the association request message; and
the association response message sent by the second station to the first station is in a second WLAN frame, and a frame header of the second WLAN frame comprises a fourth identifier used to identify the association response message.

5. The method according to claim 4, wherein an indication, in the first WLAN frame, used to indicate a receiver of the association request message is a default value; and
the method further comprises:
confirming, by the second station when the second station has been associated with the access point, that the receiver of the association request message is the access point.

6. A communication method in a wireless local area network, WLAN, comprising:
receiving, by an access point, an association request message sent by a first station associated with the access point, wherein the association request message is used to request to establish an association between a second station and the access point; and
sending, by the access point, an association response message to the first station, wherein the association response message is used to indicate approval or rejection of association establishment between the second station and the access point.

7. The method according to claim 6, wherein the association response message sent by the access point to the first station is in a first WLAN frame;
a frame header of the first WLAN frame comprises a first identifier used to identify the association response message, a medium access control, MAC, address of the first station, a MAC address of the second station, and a MAC address of the access point; and
the MAC address of the first station is used to identify a station that requests to establish an association with the access point, the MAC address of the second station is used to identify a receiver of the first WLAN frame, and the MAC address of the access point is used to identify a sender of the association response message.

8. A communications device, comprising a first station and a second station, wherein the first station and the second station are installed on a means of transportation, and the second station is located in the front of the first station in a traveling direction of the means of transportation; and
the first station is configured to send an association request message to the second station, wherein the association request message is used to request to establish an association between the first station and an access point, the access point is located outside the means of transportation, and the access point is an access point with which the second station has been associated or is to be associated; and
the second station is configured to: send the received association request message to the access point when the second station has been associated with the access point, receive an association response message sent by the access point, and send the association response message to the first station, wherein the association response message is used to indicate approval or rejection of association establishment between the first station and the access point.

9. The device according to claim 8, wherein the association request message sent by the first station to the second station is in a first Ethernet frame, and a frame header of the first Ethernet frame comprises a first identifier used to identify the association request message; and
the association response message sent by the second station to the first station is in a second Ethernet frame, and a frame header of the second Ethernet frame comprises a second identifier used to identify the association response message.

10. The device according to claim 9, wherein the first Ethernet frame lacks an indication used to identify a receiver of the association request message; and
the second station is further configured to confirm, when the second station has been associated with the access point, that the receiver of the association request message is the access point.

11. The device according to claim 8, wherein the association request message sent by the first station to the second station is in a first wireless local area network, WLAN, frame, and a frame header of the first WLAN frame comprises a third identifier used to identify the association request message; and
the association response message sent by the second station to the first station is in a second WLAN frame, and a frame header of the second WLAN frame comprises a fourth identifier used to identify the association response message.

12. The device according to claim 11, wherein an indication, in the first WLAN frame, used to indicate a receiver of the association request message is a default value; and
the second station is further configured to confirm, when the second station has been associated with the access point, that the receiver of the association request message is the access point.

13. An access point, comprising a processor and a transceiver, wherein
the processor is configured to:
receive, by using the transceiver, an association request message sent by a first station associated with the access point, wherein the association request message is used to request to establish an association between a second station and the access point; and
send an association response message to the first station by using the transceiver, wherein the association response message is used to indicate approval or rejection of association establishment between the second station and the access point.

14. The access point according to claim 13, wherein the association response message sent by the processor to the first station by using the transceiver is in a first wireless local area network, WLAN, frame;
a frame header of the first WLAN frame comprises a first identifier used to identify the association response message, a medium access control, MAC, address of the first station, a MAC address of the second station, and a MAC address of the access point; and
the MAC address of the first station is used to identify a station that requests to establish an association with the access point, the MAC address of the second station is used to identify a receiver of the first WLAN frame, and the MAC address of the access point is used to identify a sender of the association response message.

15. An access point, comprising a sending unit and a receiving unit, wherein
the receiving unit is configured to receive an association request message sent by a first station associated with the access point, wherein the association request message is used to request to establish an association between a second station and the access point; and
the sending unit is configured to send an association response message to the first station, wherein the association response message is used to indicate approval or rejection of association establishment between the second station and the access point.
